# EUROPEAN PATENT SPECIFICATION

(11) **EP 3 934 425 B1**
(45) Date of publication and mention of the grant of the patent: **28.10.2026**
(21) Application number: 19918333.6
(22) Date of filing: 25.12.2019
(51) Int. Cl.: A01N 25/10, A01N 25/02, A01N 65/36, A01N 65/00, A01N 57/00, A01N 31/02, A01N 37/36, A01N 55/10, A01N 65/22, A01N 65/28, A01P 1/00, A01P 3/00

(54) **A MULTI-PURPOSE ANTIMICROBIAL COMPOSITION**
ANTIMIKROBIELLE MEHRZWECKZUSAMMENSETZUNG
COMPOSITION ANTIMICROBIENNE POLYVALENTE

(30) Priority: 07.03.2019 TR 201903474
(43) Date of publication of application: 12.01.2022
(73) Proprietor: T.C. Erciyes Universitesi, 38039 Melikgazi/Kayseri (TR)
(72) Inventor: BENK, Ayse, Kayseri (TR); DEMIR, Ülkü Elif, Kayseri (TR); ÇOBAN, Abdullah, Kayseri (TR)
(74) Representative: Yamankaradeniz, Kemal
(86) International application number: PCT/TR2019/051205
(87) International publication number: WO 2020/180269

(56) References cited:
- WO-A1-2011/008204
- WO-A1-2016/175728
- CN-A- 107 641 377
- GB-A- 2 516 261
- TR-A1- 201 505 119
- US-A1- 2008 193 387

## Description

### Technical Field

The invention is related to a composition having high antimicrobial activity, which shows its effect in a short time without giving damage to the environment and human health and provides disinfection without losing its effect during a long time, creates a thin, permanent, transparent, waterproof film on the surface where it is applied.

The invention is particularly related to a multi-purpose antimicrobial composition which comprises organic acid and etheric oil or etheric oil mixture and/or terpene or terpene mixture and a production method thereof in order to be used as an antiseptic, biocide, insecticide and fungicide.

### State of the Art

The particular areas where the disinfectant usage is inevitable are hospitals and health centers where viruses, microbes and bacteria live and proliferate most. Apart from these, disinfection of the usage areas of the public such as the schools, dorms, kindergartens, shopping centers is very important. Various disinfectants are used in order to remove microbes which cause many diseases in humans. While the disinfection of the floors, furniture and environment is made by means of these disinfectants, at the same time various antiseptic substances with high antimicrobial activity are used in order to protect the people from infection who use these places.
- Features sought in an ideal antiseptic and disinfectant are:
- being less toxic,
- not showing allergenic and carcinogenic effect,
- showing effect in a short duration,
- not foul-smelling,
- cheap but effective.

The disinfectant and antiseptic types used widely in the present state of the art are; ethyl alcohol, isopropyl alcohol, benzalkonium chloride (zephiran), povidone iodine (Baticon, Betadine), hexaclorophene, merbromin (mersol), silver nitrate, formaldehyde, chlorhexidine (salvon), sodium hypochloride, rivanol, glutaraldehide (cidex). Besides all of these, in recent years in relation with the production of antiseptics, biocides, insecticides and fungicides by means of using alcohol, iodide, silver, volatile oils and terpenes exhibiting antimicrobial activity, many researches were made and are still made.

As it is known, polydimethylsiloxane (PDMS) is a substance which is widely experienced as a biomaterial and is used widely, is durable against temperature used and chemical effects, has low surface tension, hydrophobic, biocompatible and biostable. In the current art, a solution with high antimicrobial activity to be used as antiseptic, biocide, insecticide and fungicide from volatile oils and terpenes by using PDMS, is not developed. Patent application WO2016175728 describes an antimicrobial composition comprising PDMS activated with sulfuric acid and further comprising iodine.

In the patent application No US5288486A in relation with the subject matter in the literature, an alcohol based skin antiseptic with improved efficiency is disclosed. The evaporation rate of the alcohol is decreased by means of adding substance which is dissolved in the alcohol and increases viscosity within the prepared antiseptic and thus it is endeavored to provide alcohol remain during a long time in the application area. In the relevant application, it is determined that in this manner more effective disinfection is provided. The antiseptic solution subject to the invention, it consists of at least one alcohol selected from the group consisting of n-propyl alcohol, isopropyl alcohol and ethyl alcohol with a ratio of 30-90 % and a viscosity enhancer such as hydroxypropyl cellulose soluble in alcohol with a ratio of 0.25-5 %.

In the patent application No US8158166B2, antimicrobial solutions are prepared by means of adding a polyionic organic enhancer polymer such as polyethylenimine or parametoxyphenyl ethylamine and a polyionic inorganic enhancer such as sodium tripolyphosphate, sodium hexametaphosphate in order to improve antimicrobial features, into the herbal volatile oils or mixtures. Thyme is prepared as a herbal volatile oil in the relevant invention.

In the patent application No US5403587A, a solution is prepared by means of dissolving or dispersing one or a plurality of volatile oils exhibiting antimicrobial activity within water. Prepared volatile oil solution or dispersion is mentioned as providing an easy and effective application on hard surfaces. The approximate composition of one of the prepared solutions is given as 0.02-5% volatile oil, 2,75-30% organic solution, 0,75-10% surfactant substance and sufficient amount of water.

In the patent application No EP1278420B1, preparing an antiseptic solution which provides sterilization and disinfection on wood, leather, metal, plastic, fabric surfaces is disclosed. In the relevant application especially thyme, lemon grass, clove and eucalyptus are preferred among volatile oils, the solution is prepared by means of dissolving or dispersing these volatile oils within water by means of a solvent. In addition to this, it is stated that the antimicrobial activities of the volatile oils are accelerated when an ionizing substance such as copper sulphate, copper carbonate are added into the medium. It is also mentioned that the prepared product is completely natural and it is not toxic even it is swallowed by children and adults.

The patent application No EP3010475B1 is related to preparing an antibacterial composition for oral care from rosemary, thyme, citral comprising bisabolol or one or more of carvacrol oils or rosemary comprising carvacrol, mixtures comprising one of bisabolol oils. Some of the prepared antibacterial compositions are as the following; 20-50 ppm Bisabalol and 40-100 ppm citral, 50-100 ppm bisabalol and 30-50 ppm carvacrol, 50-100 ppm bisabalol and 250-300 ppm thyme, 50-100 ppm Bisabalol and 2500-3500 ppm rosemary.

In the patent application No EP2296479B1, the antimicrobial features of the vapor of the bergamot oil and orange oil mixture are examined. After gram positive, gram negative and antimicrobial activities against the antibiotic-resistive bacteria of the vapor of the bergamot oil and orange oil mixture is determined, their application to vegetables, fruits and salads is made and it is mentioned that this vapor can be used in horticulture and clinic field.

In the patent application No US2016106104A1, production of biocompatible polymers obtained by means of dispersing substances with antimicrobial activity such as silver and quinidine in polydimethylsiloxanes, one of which is non-cross linked and the other is cross linked and hardening with tetrahdroxysilane, in order to be used as drain and catheter. The antimicrobial activities of these prepared polymers are measured and it is determined that the prepared film preserves its activity during a long time.

Said applications are related to preparing antiseptic solutions exhibiting antimicrobial activities however it is not disclosed in any of them, the production of antiseptic, biocide, insecticide and fungicide production which forms a thin, permanent, transparent, antimicrobial film, is made by means of using PDMS and volatile oils and terpenes together. As a result, it is required to make a novelty in the relevant technical art in terms of the abovementioned disadvantages and unsolved problems in the light of the current art.

### Aim of the invention

The present invention is related to a multi-purpose antibacterial composition which fulfills the above-mentioned requirements, eliminates all disadvantages and brings some additional advantages.

The main aim of the invention is to prepare an antimicrobial composition which creates a thin, permanent, transparent, waterproof film on the surface it is applied, from volatile oils and terpenes by using PDMS, with high antimicrobial activity to be used as an antiseptic, biocide, insecticide and fungicide.

The aim of the invention is to provide a multi-purpose antimicrobial composition which shows its effect in a short time without giving damage to the environment and human health and provides disinfection without losing its effect during a long time and has a wide application area.

The aim of the invention is to obtain an antimicrobial composition which has the power of killing the carrier insects which contaminates the bacteria, microbes and fungi to human, animals and plants first of all in nit form and larva form and then in grown form.

The aim of the invention is to obtain an antimicrobial composition to be used as antiseptic, biocide, insecticide and fungicide.

The aim of the invention is to prepare a composition which has much more high antibacterial activity then Baticon which is the most widely used antimicrobial disinfectant.

An aim of the invention is to protect the effects of these etheric oils by means of creating antimicrobial film on the applied surface by means of the fact that the biocompatible PDMS is used as carriers for the etheric oils.

An aim of the invention is to provide a composition showing very high antimicrobial activity even with very low concentrations.

Another aim of the invention is to provide a composition which can be prepared as a dispersion, solution, emulsion, microemulsion, gel or cream according to the aim of application.

In order to fulfill the abovementioned aims, the invention is an antimicrobial composition comprising an activated PDMS, which shows its effect in a short time without giving damage to the environment and human health and provides disinfection without losing its effect during a long time, creates a thin, permanent, transparent, waterproof film on the surface it is applied, characterized in that; it comprises organic acid and etheric oil or etheric oil mixture and/or terpene or terpene mixture in order to be used as an antiseptic, biocide, insecticide and fungicide.

In order to fulfill the abovementioned aims, the invention is a multi-purpose antimicrobial composition production method which shows its effect in a short time without giving damage to the environment and human health and provides disinfection without losing its effect during a long time, has a wide application area and comprises the following process steps;
- activating polydimethylsiloxane (PDMS) with sulphuric acid,
- dissolving activated PDMS with sulphuric acid in alcohol,
   characterized in that; in order to be used as an antiseptic, biocide, insecticide and fungicide, it comprises the following process steps,
- adding organic acid under condenser to the obtained solution again,
- adding etheric oil or etheric oil mixtures and/or terpene or terpene mixtures are added to the cooled solution at room temperature.

The structural and characteristic features of the present invention will be understood clearly by the following detailed description and therefore the evaluation shall be made by taking the detailed description into consideration.

### Detailed Description of the Invention

In this detailed description, a multi-purpose antimicrobial composition which shows its effect in a short time without giving damage to the environment and human health and provides disinfection without losing its effect during a long time and the production method thereof is described in a manner such that to clarify the subject matter and in a manner without creating any limiting effect.

The invention is particularly related to an antimicrobial composition which comprises etheric oil or etheric oil mixtures and/or terpene or terpene mixtures by using PDMS in order to be used as an antiseptic, biocide, insecticide and fungicide, which creates a thin, permanent, transparent, waterproof film on the surface it is applied and a production method thereof.

### The formulation of the inventive antimicrobial composition:

| Content | Amount preferred by weight ratio (%) | Usable amount by weight (%) |
|---|---|---|
| Activated PMDS | 4,4 | 2,5-8,8 |
| Organic acid | 4 | 4-4,4 |
| Etheric oil or etheric oil mixtures and/or terpene or terpene mixtures | 4 | 4-20 |
| Alcohol | 87,16 | 66,39-87,16 |

### Production method of the inventive antimicrobial composition:

- Polydimethylsiloxane (PDMS) is activated by means of mixing with sulphuric acid during 5 minutes,
- PDMS which is activated with the sulphuric acid is dissolved in alcohol,
   The obtained solution is heated with stirring until it starts to boil under condenser (2-3 minutes after the solution starts boiling, it becomes totally clear) and subsequently organic acid is added to the solution,
- After the obtained solution organic acid or organic acid mixture is totally dissolved and the solution becomes clear again then the heating is closed and the solution is cooled at room temperature,
- The final product is obtained by adding etheric oil or etheric oil mixtures and/or terpene or terpene mixtures to the solution cooled at room temperature.

In the first process step of the inventive method, in order to prepare an alcohol based solution having antimicrobial activity of PDMS, first of all it must be activated by means of a strong acid such as sulphuric acid. Otherwise PDMS possesses no antimicrobial activity. The amount of sulphuric acid for dissolving PDMS should be at least 1/10 of the amount of PDMS by weight.

After acid process, alcohol is added into the medium thus alcohol based PDMS solution with antimicrobial activity is prepared. This prepared alcohol based PDMS solution carries the added antimicrobial substance and enables its durability during long time. The reason for this is that it creates a thin film on the substance with antimicrobial activity that it carries on itself and prevents immediate removal of it from the environment and prevents harmful bacteria growth by means of this created antimicrobial film.

Alcohol used in a preferred embodiment of the invention is an individual or combination selected from the group consisting of higher-carbon alcohols rather than three-carbon alcohols such as isopropyl alcohol, butanol, pentanol, isobutanol etc.

In order to increase the antimicrobial activity of the composition obtained by means of the production method subject to invention, organic acid is added into PDMS solution which is activated by means of sulfuric acid that dissolves in alcohol. The organic acid used in a preferred embodiment of the invention is an individual or a combination selected from the group consisting of citric acid, lactic acid, oxalic acid, tartaric acid and adipic acid.

Within the composition subject to the invention etheric oil or etheric oil mixtures and/or terpene or terpene mixture are used as a substance with antimicrobial activity. Etheric oils used in a preferred embodiment of the invention are; thyme oil, peppermint oil, lavender oil, eucalyptus oil, cinnamon leaf oil, basil oil, teat tree oil, sage oil, orange oil, lemon peel oil, juniper oil, cedar oil, black pepper oil or clove oil. In a preferred embodiment of the invention, used terpenes are, d-limonene, r-limonene, terebentine, orange oil or lemon oil.

In the serial studies made within the scope of the invention, antibacterial activities of the prepared solutions against gram positive, gram negative bacteria and feast are measured by means of agar diffusion method and obtained results are compared with the determined antimicrobial activities of Baticon in same conditions which is a widely used commercial product. In this study, *Aeromonas hydrophila* ATCC 7965, *Bacillus cereus* RSKK 863, *Bacillus subtilis* ATCC 6633, *Escherichia coli* ATCC 25922, *Klebsiella pneumoniae* FMC 5, *Listeria monocytogenes 1*/*2B, Morganella morganii, Mycobacterium smegmatis* RUT, *Proteus mirabilis* BC 3624, *Pseudomonas aeruginosa* ATCC 27853, *Salmonella typhimurium* NRRLE 4463, *Staphylococcus aureus* ATCC 25923 (B), *Yersinia enterocolitica* ATCC 1501 bacteria and *Candida albicans* ATCC 1223 feast are used. Each bacterium is inoculated into nutrient fluid medium, yeast is inoculated into malt extract fluid medium and diluted in a manner such that it comprises 10⁶-10⁷ cfu (colony forming units) ml⁻¹ microorganisms. Each bacterium is inoculated in to a medium (250 ml) in erlenmeyer at 43-45°C having (25 ml) sterile medium (For bacteria Muller Hinton agar and for yeast Malt Extract agar). Agars which are inoculated with microorganism culture are poured into 9 cm petri dishes, after being hardened; it is awaited during 1 hour at 4°C. 4 wel ls are opened in prepared petri dishes with 6 mm diameter and 50 ml from each sample and control sample are added within these wells. *Y. enterocolitica* and *C. albicans* are incubated at 25°C during 24-48 hours; other microorganisms are incubated at 35°C 18-24 hours. At the end of the incubation all petri dishes are examined and inhibition zones formed are measured in millimeters.

*Serial A:* the antimicrobial activities of the etheric oils in pure form are measured.

*Serial B:* the antimicrobial activities of the etheric oils are measured by means of preparing solution in a ratio of 20% by weight within isopropyl alcohol.

*Serial C:* the antimicrobial activities of the etheric oils are measured by means of preparing solution in a ratio of 4% by weight within isopropyl alcohol.

*Serial D:* Alcohol based solutions with PDMS creating permanent film of the etheric oils are prepared. In order to prepare alcohol based solution of the PDMS having antimicrobial activity, first of all it is activated by sulfuric acid. After acid process, an alcohol such as methanol, ethanol, isopropyl alcohol, butanol is added into the medium, and an alcohol based PDMS solution with antimicrobial activity is prepared. Subsequently etheric oil is added into to solution. The solution is prepared as the following;

After 4,4 grams PDMS is added and 0,44 grams sulphuric acid is added thereon within a glass balloon with gripping mouth, it is stirred approximately during 5 minutes and the complete interaction of PDMS with the sulphuric acid is provided. After the solution within the balloon is diluted with isopropyl alcohol to 96.0 grams, the solution is heated under condenser until the solution becomes clear. After the obtained clear solution is cooled to room temperature then it is mixed after 4g etheric oil is added thereon. Obtained clear solution is kept for antimicrobial activity measurements.

*Serial E:* Etheric oil solution in alcohol based PDMS solution is prepared as it is prepared in D serial however etheric oil amount is increased to 20% by weight, it is analyzed how etheric oil amount effects the antimicrobial activity of the obtained solution. The solution is prepared as the following;
After 4,4 grams PDMS is added and 0,44 grams sulphuric acid is added thereon within a glass balloon with gripping mouth, it is stirred approximately during 5 minutes and the complete interaction of PDMS with the sulphuric acid is provided. After the solution within the balloon is diluted with isopropyl alcohol to 80 grams, the solution is heated under condenser until the solution becomes clear. After the obtained clear solution is cooled to room temperature then it is mixed after 20 g etheric oil is added thereon. Obtained clear solution is kept for antimicrobial activity measurements.

*Serial F:* In this serial study, it is examined how the increase in PDMS amount effects the antimicrobial activity. For this reason PDMS amount is increased from 4,4 % to 8,8 %. In order to make comparison with E serial fully, used sulphuric acid amount is kept constant at 0,44 g. The solution is prepared as the following;
After 8,8 grams PDMS is added and 0,44 gram sulphuric acid is added thereon within a glass balloon with gripping mouth, it is stirred approximately during 5 minutes and the complete interaction of PDMS with the sulphuric acid is provided. After the solution within the balloon is diluted with isopropyl alcohol to 80 grams, the solution is heated under condenser until the solution becomes clear. After the obtained clear solution is cooled to room temperature then it is mixed after 20g etheric oil is added thereon. Obtained clear solution is kept for antimicrobial activity measurements.

*Serial G:* In this serial study, the effects of alcohol based PDMS solutions that we prepare from organic acids such as citric acid on the antimicrobial activities are examined. In order to make comparison with the previous serials, the sulphuric acid, PDMS and etheric oil amount within the final solution are kept constant respectively, 0,44%, 4,4%, 4%. The citric acid amount in these solutions is used in an equal manner with PDMS (4%) and solutions are prepared as follows;
After 4,4 grams PDMS is added and 0,44 grams sulphuric acid is added thereon within a glass balloon with gripping mouth, it is stirred approximately during 5 minutes and the complete interaction of PDMS with the sulphuric acid is provided. After the solution within the balloon is diluted with isopropyl alcohol to 92 grams, the solution is heated under condenser until the solution becomes clear. After the obtained clear solution is cooled to room temperature then it is continued to be heated after 4g citric acid is added thereon. The added citric acid is continued to be heated under condenser until it is totally dissolved and becomes clear. After the obtained clear solution is cooled to room temperature then it is mixed after 4g etheric oil is added thereon. Obtained clear solution is kept for antimicrobial activity measurements.

In the study made, first of all in addition to the antimicrobial features of the prepared alcohol based solutions by means of using single etheric oil, the effects of the etheric oil amount, PDMS and citric acid are examined. Obtained results can be seen in Tables 1-7. As it can be seen from these tables clearly that, while presence of PDMS and citric acid increase the antimicrobial feature significantly, it is determined that increasing PDMS concentration from 4,4% to 8,8% and increasing etheric oil concentration from 4% to 20% do not significantly increase the antimicrobial activities of the prepared solution. In case there is 4,4% PDMS and 4% citric acid are available within the medium, since it is determined that increasing PDMS concentration does not improve the antimicrobial features, in the subsequent trials, PDMS concentration is kept constant at 4,4%. In order to dilute the etheric oil concentration to the required concentration at the final usage area by means of producing only concentrated product, it can be kept high in order to minimize the transportation costs. However, it is determined that usage of 4% etheric oil is sufficient for obtaining final product with high antimicrobial activity. On the other hand as it can be seen clearly from the tables, different etheric oils exhibit different antimicrobial features on different bacteria. For this reason, solutions are prepared with different mixtures of the etheric oils and their antimicrobial activities are examined. Obtained results are shown in Table-8.

**Table-1: The antimicrobial activities of the serial solutions prepared by using tea tree oil**

| **Bacteria/yeast** | **Serial A** | **Serial B** | **Serial C** | **Seri D** | **Serial E** | **Serial F** | **Serial G** | **Baticon** |
|---|---|---|---|---|---|---|---|---|
| **Aeromonas (A. Hydrophila)** | - | 11.0 | 10.5 | 13.5 | 8.5 | 10.5 | 15.2 | 14.0 |
| **E.coli** | 14.5 | 12.1 | 12.5 | 11.2 | 12.5 | 12.0 | 19.3 | 13.5 |
| **Klebsiella (K. pneumoniae)** | 17.1 | 8.5 | 8.5 | 15.5 | 11.5 | 24.0 | 15.5 | 13.0 |
| **Morganella (M. Morganii)** | 24.2 | 15.2 | 11.5 | 12.5 | 12.0 | 11.0 | 22.3 | 19.0 |
| **Proteus (P.mirabilis)** | 16.0 | 8.2 | 8.5 | 11.1 | 11.0 | - | 19.5 | 19.5 |
| **Pseudomonas (P.aeruginosa)** | 16.0 | 9.5 | 12.1 | 10.5 | 11.0 | - | 15.1 | 13.5 |
| **Salmonella (S.typhimurium)** | 17.5 | 16.1 | 10.5 | 11.5 | 10.5 | 19.5 | 17.0 | 15.0 |
| **Yersinia (Y.enterocolitica)** | 18.0 | 19.1 | 11.5 | 11.5 | 19.5 | 13.0 | 22.5 | 20.0 |
| **B.cereus** | 20.0 | 13.5 | 9.5 | 15.2 | 10.5 | | 19.0 | 11.0 |
| **B.subtilis** | 17.5 | 11.5 | 8.5 | 9.1 | 13.0 | 8.0 | 17.3 | 19.5 |
| **Listeria (L.monocytogenes)** | 11.0 | 17.5 | 13.5 | 13.2 | 12.0 | - | 17.8 | 19.0 |
| **Mycobacterium (M.smegmatis)** | 6.0 | 14.2 | 6.5 | 7.1 | 11.5 | - | 18.4 | 15.0 |
| **Staphylococcus (S.aureus)** | 11.2 | 15.5 | 13.5 | 9.3 | 13.7 | 9.0 | 14.3 | 12.5 |
| **Candida (C.albicans)** | >43.0 | 19.5 | 18.5 | 14.2 | 17.5 | 17.0 | 18.8 | 11.0 |

**Table-2: The antimicrobial activities of the serial solutions prepared by using peppermint oil**

| **Bacteria/yeast** | **Serial A** | **Serial B** | **Serial C** | **Serial D** | **Serial E** | **Serial F** | **Serial G** | **Baticon** |
|---|---|---|---|---|---|---|---|---|
| **Aeromonas (A. Hydrophila)** | - | 11.0 | 8.0 | 10.5 | 8.0 | 11.0 | 13.6 | 14.0 |
| **E.coli** | 14.5 | 10.5 | 9.5 | 9.8 | 14.0 | 19.0 | 17.3 | 13.5 |
| **Klebsiella (K. pneumoniae)** | 11.5 | 8.1 | 8.5 | 8.6 | 9.5 | - | 15.6 | 13.0 |
| **Morganella (M. Morganii)** | 7.0 | 9.1 | 7.0 | 10.5 | 19.6 | - | 21.0 | 19.0 |
| **Proteus (P.mirabilis)** | 9.4 | 11.5 | 11.2 | 9.5 | 18.5 | 12.0 | 23.2 | 19.5 |
| **Pseudomonas (P.aeruginosa)** | 7.1 | 13.0 | 7.5 | 12.5 | 14.5 | - | 15.0 | 13.5 |
| **Salmonella (S.typhimurium)** | 10.5 | 13.5 | 9.5 | 12.0 | 13.5 | 8.0 | 13.5 | 15.0 |
| **Yersinia (Y.enterocolitica)** | 13.3 | 12.5 | 11.5 | 17.1 | 17.5 | 9.0 | 21.0 | 20.0 |
| **B.cereus** | 7.0 | 8.5 | 11.5 | 12.0 | 13.0 | 18.0 | 17.8 | 11.0 |
| **B.subtilis** | - | 8.2 | 10.6 | 8.5 | 8.5 | - | 15.8 | 19.5 |
| **Listeria (L.monocytogenes)** | 10.2 | 15.0 | 14.0 | 12.8 | 15.5 | 19.0 | 16.5 | 19.0 |
| **Mycobacterium (M.smegmatis)** | 10.1 | 9.1 | - | 7.1 | 15.0 | 18.0 | 17.0 | 15.0 |
| **Staphylococcus (S.aureus)** | 9.2 | 10.1 | 9.5 | 12.5 | 8.5 | 10.0 | 16.8 | 12.5 |
| **Candida (C.albicans)** | 14.5 | 19.5 | 11.4 | 17.5 | 19.5 | 9.0 | 16.8 | 11.0 |

**Tablo-3: The antimicrobial activities of the serial solutions prepared by using eucalyptus oil**

| **Bacteria/yeast** | **Serial A** | **Serial B** | **Serial C** | **Seri D** | **Serial E** | **Serial F** | **Serial G** | **Baticon** |
|---|---|---|---|---|---|---|---|---|
| **Aeromonas (A. Hydrophila)** | 18.0 | - | 9.1 | 9.0 | - | 7.5 | 13.0 | 14.0 |
| **E.coli** | 12.5 | 13.5 | 11.3 | 11.5 | 11.0 | 11.0 | 16.5 | 13.5 |
| **Klebsiella (K. pneumoniae)** | 13.0 | - | 17.5 | 8.5 | 12.8 | - | 11.5 | 13.0 |
| **Morganella (M. Morganii)** | 21.0 | 19.0 | 12.3 | 17.0 | - | 10.0 | 18.4 | 19.0 |
| **Proteus (P.mirabilis)** | 18.0 | 12.0 | 9.0 | 9.2 | 8.5 | 7.0 | 20.0 | 19.5 |
| **Pseudomonas (P.aeruginosa)** | 9.5 | 11.0 | 12.5 | 13.0 | 11.3 | 9.0 | 13.2 | 13.5 |
| **Salmonella (S.typhimurium)** | 11.0 | 14.0 | 11.0 | 12.0 | 9.5 | 12.0 | 13.0 | 15.0 |
| **Yersinia (Y.enterocolitica)** | 12.0 | 8.0 | 13.0 | 11.3 | 12.0 | 18.0 | 20.0 | 20.0 |
| **B.cereus** | 12.5 | 17.0 | - | 17.6 | 11.0 | 13.0 | 15.3 | 11.0 |
| **B.subtilis** | 9.0 | 13.0 | 8.5 | 11.1 | 9.0 | 7.0 | 15.5 | 19.5 |
| **Listeria (L.monocytogenes)** | - | - | 8.0 | 8.5 | 9.0 | - | 12.3 | 19.0 |
| **Mycobacterium (M.smegmatis)** | 18.5 | 12.0 | 12.0 | - | - | 18.0 | 14.0 | 15.0 |
| **Staphylococcus (S.aureus)** | 12.0 | 7.0 | 7.5 | 8.3 | 12.0 | 12.0 | 13.8 | 12.5 |
| **Candida (C.albicans)** | 19.5 | 20.0 | 16.4 | 18.3 | 13.0 | 9.9 | 17.7 | 11.0 |

**Tablo-4: The antimicrobial activities of the serial solutions prepared by using lavender oil**

| **Bacteria/yeast** | **Serial A** | **Serial B** | **Serial C** | **Seri D** | **Serial E** | **Serial F** | **Serial G** | **Baticon** |
|---|---|---|---|---|---|---|---|---|
| **Aeromonas (A. Hydrophila)** | - | 11.1 | - | 12.0 | 14.0 | 20.5 | 15.1 | 14.0 |
| **E.coli** | - | 17.1 | 9.5 | 13.0 | 21.5 | 20.0 | 22.5 | 13.5 |
| **Klebsiella (K. pneumoniae)** | 9.5 | 13.5 | 14.0 | 11.0 | 13.0 | 8.0 | 13.5 | 13.0 |
| **Morganella (M. Morganii)** | 9.0 | 17.5 | 11.8 | 11.0 | 13.0 | 18.0 | 19.4 | 19.0 |
| **Proteus (P.mirabilis)** | 9.2 | 13.0 | 11.0 | 12.0 | 12.0 | 19.1 | 20.2 | 19.5 |
| **Pseudomonas (P.aeruginosa)** | - | - | 10.5 | 12.0 | 23.0 | 21.0 | 24.8 | 13.5 |
| **Salmonella (S.typhimurium)** | 13.2 | 19.5 | 15.5 | 12.0 | 22.5 | 21.1 | 22.3 | 15.0 |
| **Yersinia (Y.enterocolitica)** | 9.0 | 14.0 | 12.5 | 10.0 | 15.5 | 22.2 | 18.4 | 20.0 |
| **B.cereus** | 13.5 | 17.0 | 12.3 | 9.0 | 12.0 | 8.2 | 18.3 | 11.0 |
| **B.subtilis** | 11.5 | 12.5 | 7.0 | 12.0 | 15.5 | 13.5 | 18.2 | 19.5 |
| **Listeria (L.monocytogenes)** | 9.0 | 13.5 | 11.0 | 12.0 | 14.0 | 7.0 | 19.3 | 19.0 |
| **Mycobacterium (M.smegmatis)** | 9.5 | - | - | 12.0 | 20.0 | 19.2 | 19.5 | 15.0 |
| **Staphylococcus (S.aureus)** | 12.5 | 20.0 | 11.8 | 11.0 | 13.0 | 12.1 | 16.3 | 12.5 |
| **Candida (C.albicans)** | 15.4 | 21.0 | 13.5 | 17.0 | 23.0 | 15.3 | 20.3 | 11.0 |

**Tablo-5: The antimicrobial activities of the serial solutions prepared by using cinnamon leaf oil**

| **Bacteria/yeast** | **Serial A** | **Serial B** | **Serial C** | **Seri D** | **Serial E** | **Serial F** | **Serial G** | **Baticon** |
|---|---|---|---|---|---|---|---|---|
| **Aeromonas (A. Hydrophila)** | 11.3 | 17.5 | 7.0 | 15.2 | 17.0 | 22.8 | 25.0 | 14.0 |
| **E.coli** | 17.5 | 15.5 | 13.5 | 14.5 | 15.5 | 19.8 | 21.0 | 13.5 |
| **Klebsiella (K. pneumoniae)** | 9.8 | 15.5 | 14.3 | 13.5 | 19.2 | 15.3 | 23.0 | 13.0 |
| **Morganella (M. Morganii)** | 21.2 | 23.2 | 11.8 | 12.5 | 18.1 | 21.2 | 18.0 | 19.0 |
| **Proteus (P.mirabilis)** | 13.5 | 14.5 | 8.5 | 13.5 | 20.5 | 19.8 | 24.5 | 19.5 |
| **Pseudomonas (P.aeruginosa)** | 15.0 | 18.2 | 10.2 | 12.2 | 21.5 | 16.3 | 24.0 | 13.5 |
| **Salmonella (S.typhimurium)** | 15.5 | 14.5 | 12.5 | 12.5 | 19.5 | 18.3 | 21.5 | 15.0 |
| **Yersinia** | 13.5 | 11.5 | 11.1 | 12.5 | 19.5 | 21.2 | 23.1 | 20.0 |
| **(Y.enterocolitica)** | | | | | | | | |
| **B.cereus** | 15.0 | 17.5 | 12.1 | 16.5 | 20.5 | 16.0 | 30.5 | 11.0 |
| **B.subtilis** | 13.5 | 15.5 | 12.8 | 13.0 | 18.3 | 17.2 | 17.2 | 19.5 |
| **Listeria (L.monocytogenes)** | 12.5 | 14.8 | 19.5 | 17.5 | 21.3 | 19.8 | 21.0 | 19.0 |
| **Mycobacterium (M.smegmatis)** | 9.5 | 17.5 | - | 14.0 | 23.1 | 14.8 | 25.6 | 15.0 |
| **Staphylococcus (S.aureus)** | 9.0 | 18.2 | 13.2 | 15.0 | 21.8 | 18.2 | 23.2 | 12.5 |
| **Candida (C.albicans)** | 20.5 | 29.2 | 23.5 | 18.2 | 29.3 | 30.8 | 35.1 | 11.0 |

**Tablo-6: The antimicrobial activities of the serial solutions prepared by using thyme oil**

| **Bacteria/yeast** | **Serial A** | **Serial B** | **Serial C** | **Seri D** | **Serial E** | **Serial F** | **Serial G** | **Baticon** |
|---|---|---|---|---|---|---|---|---|
| **Aeromonas (A. Hydrophila)** | 43.0 | 28.0 | 18.0 | 27.0 | 36.0 | 30.5 | >43.0 | 14.0 |
| **E.coli** | 18.0 | 33.1 | 19.5 | 16.5 | 41.5 | 21.0 | 30.5 | 13.5 |
| **Klebsiella (K. pneumoniae)** | 21.5 | 28.5 | 16.8 | 21.5 | 45.5 | 26.0 | 38.0 | 13.0 |
| **Morganella (M. Morganii)** | 26.0 | >43.0 | 14.5 | 21.0 | 31.5 | 32.0 | >43.0 | 19.0 |
| **Proteus (P.mirabilis)** | 21.0 | 41.0 | 23.0 | 20.5 | 29.0 | 25.0 | >43.0 | 19.5 |
| **Pseudomonas (P.aeruginosa)** | 31.0 | 33.5 | 19.3 | 23.0 | 32.0 | 21.0 | 42.0 | 13.5 |
| **Salmonella (S.typhimurium)** | 37.0 | 30.5 | 13.5 | 15.5 | 24.5 | 36.0 | 30.0 | 15.0 |
| **Yersinia (Y.enterocolitica)** | 21.0 | >43.0 | 19.5 | 23.8 | 34.5 | 31.0 | >43.0 | 20.0 |
| **B.cereus** | 32.0 | 32.0 | 17.0 | 19.5 | 31.5 | 21.0 | 27.0 | 11.0 |
| **B.subtilis** | 34.0 | >43.0 | 15.0 | 18.0 | 31.0 | 18.0 | >43.0 | 19.5 |
| **Listeria (L.monocytogenes)** | 37.0 | 27.5 | 20.0 | 33.8 | 42.5 | 37.0 | >43.0 | 19.0 |
| **Mycobacterium (M.smegmatis)** | 9.0 | 32.0 | 11.0 | 29.5 | 30.5 | 28.0 | >43.0 | 15.0 |
| **Staphylococcus (S.aureus)** | 21.8 | 30.5 | 21.5 | 21.0 | 24.5 | 25.0 | 37.0 | 12.5 |
| **Candida (C.albicans)** | >43.0 | >43.0 | 31.5 | >43.0 | 40.0 | 32.0 | >43.0 | 11.0 |

**Tablo-7: The antimicrobial activities of the serial solutions prepared by using basil oil**

| **Bacteria/yeast** | **Serial A** | **Serial B** | **Serial C** | **Seri D** | **Serial E** | **Serial F** | **Serial G** | **Baticon** |
|---|---|---|---|---|---|---|---|---|
| **Aeromonas (A. Hydrophila)** | - | - | 9.5 | 12.5 | 14.5 | 8.0 | 15.2 | 14.0 |
| **E.coli** | 12.5 | 13.5 | 10.0 | 17.0 | 18.5 | 18.0 | 18.5 | 13.5 |
| **Klebsiella (K. pneumoniae)** | 8.0 | 8.5 | - | 12.0 | 13.0 | 8.5 | 13.8 | 13.0 |
| **Morganella (M. Morganii)** | 19.0 | 16.5 | - | 12.5 | 17.0 | 17.0 | 19.4 | 19.0 |
| **Proteus (P.mirabilis)** | 8.5 | 13.0 | - | 12.0 | 17.5 | 17.5 | 18.5 | 19.5 |
| **Pseudomonas (P.aeruginosa)** | 9.0 | 15.3 | 10.0 | 13.5 | 11.0 | - | 15.9 | 13.5 |
| **Salmonella (S.typhimurium)** | 13.0 | 13.0 | 9.5 | 12.8 | 12.5 | 11.0 | 18.0 | 15.0 |
| **Yersinia (Y.enterocolitica)** | 14.5 | 13.5 | 11.0 | 13.0 | 19.0 | 19.0 | 21.1 | 20.0 |
| **B.cereus** | 9.0 | 14.5 | 11.5 | 13.0 | 18.0 | 18.0 | 15.0 | 11.0 |
| **B.subtilis** | 11.0 | 12.3 | 13.0 | 14.0 | 9.5 | 9.5 | 14.5 | 19.5 |
| **Listeria (L.monocytogenes)** | - | 12.0 | 13.0 | 13.0 | 13.5 | 13.5 | 15.5 | 19.0 |
| **Mycobacterium (M.smegmatis)** | - | - | 8.5 | - | 17.5 | 17.5 | 18.0 | 15.0 |
| **Staphylococcus (S.aureus)** | 13.0 | - | - | 12.5 | 12.0 | 8.5 | 12.8 | 12.5 |
| **Candida (C.albicans)** | 17.0 | 19.0 | 12.0 | 31.0 | 30.5 | 20.5 | 17.3 | 11.0 |

**Tablo-8: The antimicrobial activities of the solutions prepared from the different mixtures of the Etheric oils**

| **Bacteria/yeast** | 1% peppermint oil 1% eucalyptus oil 1% tea tree oil 1% cinnamon leaf tree | 1% cinnamon leaf tree 3% Thyme oil | 1% thyme oil 3% basil oil | 1% peppermint oil 1% eucalyptu s oil 2% thyme oil | 1% peppermint oil 1% eucalyptus oil 2% lavender oil | Baticon |
|---|---|---|---|---|---|---|
| **Aeromonas (A. Hydrophila)** | 21.0 | 20.0 | 22.5 | 15.0 | 20.5 | 14.0 |
| **E.coli** | 19.0 | 19.0 | 24.5 | 19.0 | 22.0 | 13.5 |
| **Klebsiella (K. pneumoniae)** | 19.0 | 23.0 | 22.5 | 19.0 | 24.0 | 13.0 |
| **Morganella (M. Morganii)** | 27.5 | 22.0 | 27.0 | 17.5 | 23.5 | 19.0 |
| **Proteus (P.mirabilis)** | 22.0 | 27.0 | 21.0 | 19.0 | 27.0 | 19.5 |
| **Pseudomonas (P.aeruginosa)** | 18.0 | 24.0 | 29.5 | 20.5 | 22.5 | 13.5 |
| **Salmonella (S.typhimurium)** | 18.5 | 25.0 | 21.0 | 22.0 | 22.5 | 15.0 |
| **Yersinia (Y.enterocolitica)** | 20.0 | 23.0 | 23.0 | 17.5 | 17.5 | 20.0 |
| **B.cereus** | 19.0 | 24.5 | 21.0 | 13.0 | 21.5 | 11.0 |
| **B.subtilis** | 17.3 | 21.0 | 41.0 | 14.5 | 39.5 | 19.5 |
| **Listeria (L.monocytogenes)** | 16.5 | 21.0 | 37.0 | 18.0 | 21.0 | 19.0 |
| **Mycobacterium (M.smegmatis)** | 19.5 | 28.0 | 23.5 | 18.0 | 21.0 | 15.0 |
| **Staphylococcus (S.aureus)** | 18.5 | 22.0 | 22.8 | 22.5 | 21.0 | 12.5 |
| **Candida (C.albicans)** | 28.5 | 37.0 | 39.0 | 36.0 | 38.5 | 11.0 |

Antimicrobial activities mentioned in serial A belong to 100% to volatile oils. As it can be seen, antimicrobial activities of the oils used except the thyme oil are mostly low compared to Baticon, but in some of them it is nearly equal. In order to use these etheric oils as insecticide, biocide and fungicide alone, it is determined that antimicrobial activities are required to be increased. Solutions of the etheric oils in isopropyl alcohol 20% and %4 by weight are prepared and measured antimicrobial activities are mentioned as serial B and C respectively. As it can be clearly seen from here, solutions of the etheric oils in isopropyl alcohol do not exhibit sufficient antimicrobial activity. However it is observed that antimicrobial activities of 20% and 4% of these solutions of these oils are similar. These results show that diluting etheric oils by means of isopropyl alcohol significantly decrease the antimicrobial activities. In these results it is clearly shown that amount of etheric oil within the final product prepared with alcohol does not play a critical role on the antimicrobial activity. For this reason, in order to use the prepared solutions as an insecticide, biocide and fungicide, the etheric oil amount in it is not required to be very high and it is also determined that with diluted solutions a more economical production can be made.

In order to use enteric oils as an insecticide, biocide and fungicide, it is required that their antibacterial activities must be increased, it is determined that whether alone or not alcohol based concentrated and diluted solutions do not provide this. In order to increase the antibacterial activities of the solutions, inorganic substances such as silver, iodide, copper, zinc etc. can be added into the medium. However these elements are observed as both reacting with the terpenes such as d-limonene, terebentine, orange oil etc. and double bonds in the etheric oils and also decreasing the antibacterial activities of these substances and of themselves. For these reasons, in order to increase the antimicrobial activities of the solutions, instead of said elements, biocompatible PDMS and organic acids such as citric acid etc. are used. Solutions are prepared with biocompatible PDMS which creates thin, transparent, permanent film. In order to increase the activity of PDMS; first of all it is subjected to a process with sulphuric acid, then it is dissolved in isopropyl alcohol.

Solutions comprising 4% and 20% etheric oil specified in D and E serials are prepared in order to determine how the change in amount of the etheric oil within a PDMS solution having this antimicrobial activity influences the antimicrobial activity. The antimicrobial activities of the solutions with isopropyl alcohol comprising 4,4% from the activated PDMS with sulfuric acid prepared in this manner and solutions prepared with only isopropyl alcohol are compared. As it can be seen from here that when 4,4% activated PDMS added into the medium, it is observed that the antimicrobial activities of the solutions both comprise 4% and 20% etheric oil increase in a significant manner. However it is determined that the antimicrobial activities of the alcohol based solutions without PDMS but with etheric oils with the same ratio do not increase in a sufficient manner. In this case, it is clearly seen that activated PDMS increases the antimicrobial activities of the solutions. On the other hand, it is determined that increasing the etheric oil concentration from 4% to 20% in either solution with PDMS or solution without PDMS does not increase the antimicrobial activities in a significant manner. These results clearly show that increasing the etheric oil concentration does not increase the antimicrobial activity in the same ratio. In this case, it is seen that with the diluted solutions of the etheric oils, insecticides, biocides and fungicides which have sufficient antimicrobial activity, are economical and effective during a long time can be produced.

Together with adding 4,4% PDMS into the medium, it is determined that the antimicrobial activities of the solutions increase significantly. In order to determine whether it is possible to increase the antimicrobial activities of the solutions by means of increasing PDMS amount, 8,8% ratio of PDMS by weight is added into the solutions. Antibacterial activity results of the obtained solutions are seen in F serial. When antimicrobial activity results ins E serial and F serial are compared, it is determined that increasing the PDMS amount in the solutions from 4,4% to 8,8 % does not increase antimicrobial activities of the solutions, on the contrary it decreases antimicrobial activities of most of the solutions. In these results, it is clearly shown that optimum value of the PDMS amount to be used in the solutions is approximately 4,4%.

The above obtained results show that optimum value of PDMS to be used in insecticide, biocide and fungicide production is 4,4% and the etheric oil amount is approximately 4%. Since it is not possible to increase the antimicrobial activities of the solutions to be used as insecticide, biocide and fungicide by increasing the amount of PDMS and etheric oil, in order to increase the antimicrobial activities of the solutions, in order to determine whether organic acids such as citric acid etc. can be added into the medium or not, in case they are added how the antimicrobial activity will change, trials in G serial are made. In this serial, alcohol based solutions including 4,4% PDMS, 4% etheric oil and 4% citric acid are prepared and their antimicrobial activities are measured. As it can be seen from the obtained results; the solutions with the highest antimicrobial activity are included within this serial. It is clearly seen that the antimicrobial activities of the solutions within G serial are very higher than the antimicrobial activities of Baticon. In these trials although easily found citric acid which is not harmful to human health is used, other organic acids (tartaric acid, oxalic acid, adipic acid, lactic acid etc.) can also be used. In these trials isopropyl alcohol is used as the alcohol. It is not possible to prepare a solution with PDMS by means of methanol and ethanol. However alcohols containing higher carbon (butanol, isobutanol etc.) can be used for this purpose easily.

These results show that optimum composition of the solutions to be used as a fungicide, biocide and insecticide which has the highest antimicrobial activity, is economic and creates a permanent and effective film are the alcohol based solutions comprising 4,4% activated PDMS, 4% etheric oil or terpene and 4% citric acid. As a result of the studies made, it is seen that antimicrobial activities of different etheric oils against different bacteria changes. Some of these etheric oils are effective against gram positive bacteria and some of them are effective against gram negative bacteria, while some of them are effective against yeast. In order to prepare solutions to be used as a biocide, fungicide and insecticide with high antimicrobial activity against gram positive bacteria, gram negative bacteria and yeast, instead of using a single etheric oil, different mixtures of the etheric oils are prepared. Solution compositions are taken as the basis where the best results are obtained during preparation of the solutions by means of etheric oils alone. Alcohol based solutions are prepared by using 4,4% activated PDMS, 4% citric acid and 4% etheric oil mixture. The etheric oil portion constituting 4% of the solution is prepared by using different percentages from different type of etheric oils. Final solutions are prepared with these mixtures and their antimicrobial activities are measured. When we analyze the results in Table 8 comparatively, instead of using etheric oils alone, using thereof as a mixture both increases the antimicrobial activity and provides obtaining solutions with high activity against gram negative, gram positive bacteria and yeast.

In addition to this, in order to determine whether these prepared solutions can be used as an insecticide, biocide and fungicide, samples are sent to the companies who make insecticide, biocide and fungicide practices. As a result of the trials made by these companies, the obtained results are as the following:
- All of the solutions dismiss and kill the housefly and mosquito in an effective manner.
- After the solutions are sprayed on the surface in order to kill the housefly or mosquito, it is durable during a long time and when the housefly or mosquito settles on the same surface, it is determined that killing effect still continues.
- It is observed that solutions of F serial comprising 8,8% activated PDMS leads to stains on the sprayed surface (particularly curtains and furniture).
- The prepared solutions are tried on ryllotalpa gryllotalpa whose regional name is mole cricket which cuts the toots of the plants in the field and gives harm to the plants, and it is determined that it kills such insects within a very short period of time. Also they are determined to be very effective in struggle with cockroach, ant, bedbug and flea.
- Particularly in home and office applications, these solutions prepared by the etheric oils are observed to be effective in upper respiratory tract infections.

In addition to all of these, it is also determined that these prepared solutions can be used in hand and body disinfections effectively without causing any irritation, particularly it is determined that they are effective on tinea pedis, nail fungus.

The inventive antimicrobial composition comprises 4,4% activated PDMS, 87,16% alcohol, 4% organic acid and 4% etheric oil or etheric oil mixture and/or terpene or terpene mixture..

## Claims

1. An antimicrobial composition, suitable for showing its effect in a short time without giving damage to the environment and human health and provides disinfection without losing its effect during a long time, creates a thin, permanent, transparent, waterproof film on the surface it is applied, **characterised in that** it comprises activated polydimethylsiloxane (PDMS), which is obtained by treating PDMS with sulfuric acid, and alcohol, and further **characterized in that** it comprises
organic acid and etheric oil or
organic acid and etheric oil mixture or
organic acid and terpene and etheric oil mixture or
organic acid and terpene or
organic acid and terpene mixture,
this composition being suitable for use
as an antiseptic, biocide, insecticide and fungicide.

2. An antimicrobial composition according to claim 1, **characterized in that**; it comprises activated PDMS in a ratio of 2.5-8.8% by weight, alcohol in a ratio of 66.39-87.16% by weight, organic acid in ratio of 4-4.4% by weight and etheric oil or etheric oil mixture and/or terpene or terpene mixture in a ratio of 4-20% by weight.

3. An antimicrobial composition according to claim 1, **characterized in that**; said organic acid comprises an individual or combinations selected from the group consisting of citric acid, lactic acid, oxalic acid, tartaric acid and adipic acid.

4. An antimicrobial composition according to claim 1, **characterized in that**; said alcohol comprises individual or combinations selected from the group consisting of isopropyl alcohol, butanol, penthanol, isobutanol having more carbon alcohols than three-carbon alcohols.

5. An antimicrobial composition according to claim 1, **characterized in that**; said etheric oil is thyme oil, peppermint oil, lavender oil, eucalyptus oil, cinnamon leaf oil, basil oil, tea tree oil, sage oil, orange oil, lemon oil, lemon peel oil, juniper oil, cedar oil, black pepper oil or clove oil.

6. An antimicrobial composition according to claim 1, **characterized in that**; said terpene is selected from the group consisting of d-limonene, r-limonene, and terebentine.

7. A multi-purpose antimicrobial composition production method comprising the following process steps;
∘ activating polydimethylsiloxane (PDMS) with sulphuric acid,
∘ dissolving activated PDMS with sulphuric acid in alcohol,
∘ **characterized in that**; in order to be used as an antiseptic, biocide, insecticide and fungicide, it comprises the following process steps,
∘ adding organic acid under condenser to the obtained solution again,
∘ adding etheric oil or etheric oil mixtures and/or terpene or terpene mixtures are added to the cooled solution at room temperature.

8. A method according to claim 7, **characterized in that**; said alcohol comprises individual or combinations selected from the group consisting of isopropyl alcohol, butanol, penthanol, isobutanol having more carbon alcohols than three-carbon alcohols.

9. A method according to claim 7, **characterized in that**; said organic acid comprises an individual or combinations selected from the group consisting of citric acid, lactic acid, oxalic acid, tartaric acid and adipic acid.

10. A method according to claim 7, **characterized in that**; said etheric oil is thyme oil, peppermint oil, lavender oil, eucalyptus oil, cinnamon leaf oil, basil oil, tea tree oil, sage oil, orange oil, lemon peel oil, juniper oil, cedar oil, black pepper oil or clove oil.

11. A method according to claim 7, **characterized in that**; said terpenes are d-limonene, r-limonene, terebentine.

12. A method according to claim 7, **characterized in that**; it comprises activated PDMS in a ratio of 4.4% by weight, alcohol in a ratio of 66.39-87.16% by weight, organic acid in ratio of 4 % by weight and etheric oil or etheric oil mixture and/or terpene or terpene mixture in a ratio of 4% by weight.

13. An antimicrobial composition according to claim 1 and obtainable by said production method according to any of claims 7 to 12 and suitable to be used as an antiseptic, biocide, insecticide and fungicide, having high antimicrobial activity, with a thin, permanent, transparent, waterproof film.

14. An antimicrobial composition according to claim 13 in the form of a solution, dispersion, emulsion, micro emulsion, gel, or cream.

## Patentansprüche

1. Antimikrobielle Zusammensetzung, die dazu geeignet ist, ihre Wirkung in kurzer Zeit zu zeigen, ohne die Umwelt und die menschliche Gesundheit zu schädigen, und eine Desinfektion bereitstellt, ohne ihre Wirkung während einer langen Zeit zu verlieren, und einen dünnen, dauerhaften, transparenten, wasserdichten Film auf der Oberfläche erzeugt, auf die sie aufgebracht wird, **dadurch gekennzeichnet, dass** sie aktiviertes Polydimethylsiloxan (PDMS), das durch Behandeln von PDMS mit Schwefelsäure erhalten wird, und Alkohol umfasst, und ferner **dadurch gekennzeichnet, dass** sie Folgendes umfasst
eine organische Säure und ein ätherisches Öl oder
eine organische Säure und ein ätherisches Ölgemisch oder
eine organische Säure und ein Gemisch aus einem Terpen und ätherischem Öl oder
eine organische Säure und ein Terpen oder
ein Gemisch aus organisches Säure und einem Terpen,
wobei diese Zusammensetzung zur Verwendung als Antiseptikum, Biozid, Insektizid und Fungizid geeignet ist.

2. Antimikrobielle Zusammensetzung nach Anspruch 1, **dadurch gekennzeichnet, dass**; sie aktiviertes PDMS in einem Verhältnis von 2,5-8,8 Gewichts-%, Alkohol in einem Verhältnis von 66,39-87,16 Gewichts-%, organische Säure in einem Verhältnis von 4-4,4 Gewichts-% und ätherisches Öl oder ätherisches Ölgemisch und/oder Terpen oder Terpengemisch in einem Verhältnis von 4-20 Gewichts-% umfasst.

3. Antimikrobielle Zusammensetzung nach Anspruch 1, **dadurch gekennzeichnet, dass**; die organische Säure ein Element oder Kombinationen umfasst, das/die aus der Gruppe ausgewählt ist/sind, die aus Zitronensäure, Milchsäure, Oxalsäure, Weinsäure und Adipinsäure besteht.

4. Antimikrobielle Zusammensetzung nach Anspruch 1, **dadurch gekennzeichnet, dass**; der Alkohol ein Element oder Kombinationen umfasst, das/die aus der Gruppe ausgewählt ist/sind, die aus Isopropylalkohol, Butanol, Penthanol, Isobutanol mit mehr Kohlenstoffalkoholen als drei Kohlenstoffalkoholen besteht.

5. Antimikrobielle Zusammensetzung nach Anspruch 1, **dadurch gekennzeichnet, dass**; das ätherische Öl Thymianöl, Pfefferminzöl, Lavendelöl, Eukalyptusöl, Zimtblattöl, Basilikumöl, Teebaumöl, Salbeiöl, Orangenöl, Zitronenöl, Zitronenschalenöl, Wacholderöl, Zedernöl, Schwarzpfefferöl oder Nelkenöl ist.

6. Antimikrobielle Zusammensetzung nach Anspruch 1, **dadurch gekennzeichnet, dass**; das Terpen aus der Gruppe ausgewählt ist, die aus Limonen, r-Limonen und Terebentin besteht.

7. Verfahren zur Herstellung einer antimikrobiellen Mehrzweckzusammensetzung, umfassend die folgenden Prozessschritte:
∘ Aktivieren von Polydimethylsiloxan (PDMS) mit Schwefelsäure,
∘ Lösen von aktiviertem PDMS mit Schwefelsäure in Alkohol,
∘ **dadurch gekennzeichnet, dass**; es zur Verwendung als Antiseptikum, Biozid, Insektizid und Fungizid die folgenden Vorgangsschritte umfasst,
∘ erneutes Hinzufügen von organischer Säure unter dem Kondensator zu der erhaltenen Lösung,
∘ Hinzufügen von ätherischem Öl oder ätherischen Ölgemischen und/oder Terpen oder Terpengemischen bei Raumtemperatur zu der abgekühlten Lösung.

8. Verfahren nach Anspruch 7, **dadurch gekennzeichnet, dass**; der Alkohol ein Element oder Kombinationen umfasst, das/die aus der Gruppe ausgewählt ist/sind, die aus Isopropylalkohol, Butanol, Penthanol, Isobutanol mit mehr Kohlenstoffalkoholen als drei Kohlenstoffalkoholen besteht.

9. Verfahren nach Anspruch 7, **dadurch gekennzeichnet, dass**; die organische Säure ein Element oder Kombinationen umfasst, das/die aus der Gruppe ausgewählt ist/sind, die aus Zitronensäure, Milchsäure, Oxalsäure, Weinsäure und Adipinsäure besteht.

10. Verfahren nach Anspruch 7, **dadurch gekennzeichnet, dass**; das ätherische Öl Thymianöl, Pfefferminzöl, Lavendelöl, Eukalyptusöl, Zimtblattöl, Basilikumöl, Teebaumöl, Salbeiöl, Orangenöl, Zitronenschalenöl, Wacholderöl, Zedernöl, Schwarzpfefferöl oder Nelkenöl ist.

11. Verfahren nach Anspruch 7, **dadurch gekennzeichnet, dass**; die Terpene d-Limonen, r-Limonen, Terebentin sind.

12. Verfahren nach Anspruch 7, **dadurch gekennzeichnet, dass**; sie aktiviertes PDMS in einem Verhältnis von 4,4 Gewichts-%, Alkohol in einem Verhältnis von 66,39-87,16 Gewichts-%, organische Säure in einem Verhältnis von 4 Gewichts-% und ätherisches Öl oder ätherisches Ölgemisch und/oder Terpen oder Terpengemisch in einem Verhältnis von 4 Gewichts-% umfasst.

13. Antimikrobielle Zusammensetzung nach Anspruch 1 und erhältlich durch das Herstellungsverfahren nach einem der Ansprüche 7 bis 12 und geeignet zur Verwendung als Antiseptikum, Biozid, Insektizid und Fungizid mit hoher antimikrobieller Aktivität mit einem dünnen, dauerhaften, transparenten, wasserdichten Film.

14. Antimikrobielle Zusammensetzung nach Anspruch 13 in Form einer Lösung, Dispersion, Emulsion, Mikroemulsion, eines Gels oder einer Creme.

## Revendications

1. Composition antimicrobienne, appropriée pour produire son effet en peu de temps sans nuire à l'environnement et à la santé humaine et assure une désinfection sans perdre son effet pendant une longue période, crée un film mince, permanent, transparent et imperméable à l'eau sur la surface sur laquelle elle est appliquée, **caractérisée en ce qu'**elle comprend du polydiméthylsiloxane (PDMS) activé, qui est obtenu en traitant le PDMS avec de l'acide sulfurique et de l'alcool, et **caractérisée en outre en ce qu'**elle comprend
un acide organique et une huile éthérique, ou
un acide organique et un mélange d'huiles éthériques, ou
un acide organique et un terpène et un mélange d'huiles éthériques, ou
un acide organique et un terpène, ou
un acide organique et un mélange de terpènes,
cette composition étant appropriée pour être utilisée comme antiseptique, biocide, insecticide et fongicide.

2. Composition antimicrobienne selon la revendication 1, **caractérisée en ce que** : elle comprend le PDMS activé dans une proportion de 2,5 à 8,8 % en poids, un alcool dans une proportion de 66,39 à 87,16 % en poids, un acide organique dans une proportion de 4 à 4,4 % en poids et une huile éthérique ou un mélange d'huiles éthériques et/ou un terpène ou un mélange de terpènes dans une proportion de 4 à 20 % en poids.

3. Composition antimicrobienne selon la revendication 1, **caractérisée en ce que** ; ledit acide organique comprend un acide individuel ou des combinaisons choisis dans le groupe constitué de l'acide citrique, de l'acide lactique, de l'acide oxalique, de l'acide tartrique et de l'acide adipique.

4. Composition antimicrobienne selon la revendication 1, **caractérisée en ce que** ; ledit alcool comprend un alcool individuel ou des combinaisons choisis dans le groupe constitué de l'alcool isopropylique, du butanol, du penthanol, de l'isobutanol comportant plus d'alcools de carbone que trois alcools de carbone.

5. Composition antimicrobienne selon la revendication 1, **caractérisée en ce que** ; ladite huile éthérique est l'huile de thym, l'huile de menthe poivrée, l'huile de lavande, l'huile d'eucalyptus, l'huile de feuilles de cannelle, l'huile de basilic, l'huile d'arbre à thé, l'huile de sauge, l'huile d'orange, l'huile de citron, l'huile d'écorce de citron, l'huile de genévrier, l'huile de cèdre, l'huile de poivre noir ou l'huile de clou de girofle.

6. Composition antimicrobienne selon la revendication 1, **caractérisée en ce que** : ledit terpène est choisi dans le groupe constitué du d-limonène, du r-limonène et de la térébentine.

7. Procédé de production d'une composition antimicrobienne polyvalente comprenant les étapes de processus suivantes :
∘ activation du polydiméthylsiloxane (PDMS) avec de l'acide sulfurique,
∘ dissolution du PDMS activé avec de l'acide sulfurique dans un alcool,
∘ **caractérisé en ce que** ; afin d'être utilisé comme antiseptique, biocide, insecticide et fongicide, il comprend les étapes de processus suivantes,
∘ ajout à nouveau d'un acide organique sous condenseur à la solution obtenue,
∘ ajout d'une huile éthérique ou de mélanges d'huiles éthériques et/ou d'un terpène ou de mélanges de terpènes sont ajoutés à la solution refroidie à température ambiante.

8. Procédé selon la revendication 7, **caractérisé en ce que** ; ledit alcool comprend un alcool individuel ou des combinaisons choisis dans le groupe constitué de l'alcool isopropylique, du butanol, du penthanol, de l'isobutanol comportant plus de trois atomes de carbone.

9. Procédé selon la revendication 7, **caractérisé en ce que** ; ledit acide organique comprend un acide individuel ou des combinaisons choisis dans le groupe constitué de l'acide citrique, de l'acide lactique, de l'acide oxalique, de l'acide tartrique et de l'acide adipique.

10. Procédé selon la revendication 7, **caractérisé en ce que** ; ladite huile éthérique est l'huile de thym, l'huile de menthe poivrée, l'huile de lavande, l'huile d'eucalyptus, l'huile de feuilles de cannelle, l'huile de basilic, l'huile d'arbre à thé, l'huile de sauge, l'huile d'orange, l'huile d'écorce de citron, l'huile de genévrier, l'huile de cèdre, l'huile de poivre noir ou l'huile de clou de girofle.

11. Procédé selon la revendication 7, **caractérisé en ce que** : lesdits terpènes sont le d-limonène, le r-limonène, la térébentine.

12. Procédé selon la revendication 7, **caractérisé en ce que** : il comprend le PDMS activé dans une proportion de 4,4 % en poids, un alcool dans une proportion de 66,39 à 87,16 % en poids, un acide organique dans une proportion de 4 % en poids et une huile éthérique ou un mélange d'huiles éthériques et/ou un terpène ou un mélange de terpènes dans une proportion de 4 % en poids.

13. Composition antimicrobienne selon la revendication 1 et pouvant être obtenue par ledit procédé de production selon l'une quelconque des revendications 7 à 12 et appropriée pour être utilisée comme antiseptique, biocide, insecticide et fongicide, présentant une activité antimicrobienne élevée, avec un film mince, permanent, transparent, imperméable à l'eau.

14. Composition antimicrobienne selon la revendication 13, sous la forme d'une solution, d'une dispersion, d'une émulsion, d'une microémulsion, d'un gel ou d'une crème.
